# EUROPEAN PATENT APPLICATION

(11) **EP 4 711 165 A1**
(43) Date of publication of application: **18.03.2026**
(21) Application number: 25191661.5
(22) Date of filing: 24.07.2025
(51) Int. Cl.: B60K 1/00

(54) **ELECTRIC-POWERED ROAD VEHICLE**

(30) Priority: 12.09.2024 IT 202400020299
(71) Applicant: IVECO S.P.A., 10156 Torino (IT)
(72) Inventor: DALLA TORRE, Lorenzo, 10156 Torino (IT)
(74) Representative: Fiume, Orazio

(57) **Abstract**

The present invention relates to an electrically powered road vehicle (1), comprising:
- at least two rear drive wheels (2), a rear axle (11) and a rear differential (10);
- a rear electric propulsion system (4), comprising a reversible electric machine (6), at least one battery (7) operatively connected to the electric machine (6), a transmission box (8) connected to the electric machine (6), and a drive shaft (9) connecting the transmission box (8) to the rear differential (10),

wherein the battery (7) is arranged in front of the rear axle (11),
wherein the electric machine (6), the transmission box (8) and the drive shaft (9) are arranged raised and cantilevered to the rear of the rear axle (11), with the electric machine (6) oriented longitudinally, the transmission box (8) oriented transversely and the drive shaft (9) oriented longitudinally or substantially longitudinally, such that the electric machine (6) - transmission box (8) - drive shaft (9) assembly has a substantially U-shaped configuration.

## Description

### Field of the invention

The present invention relates to an electrically powered road vehicle, by way of non-limiting example a van or a truck, capable of moving on the road or, possibly, on rough terrain and/or with steep slopes.

### State of the art

Vehicles such as vans and trucks, with four- or two-wheel drive, are known, equipped with internal combustion engines, which ensure high operational versatility thanks to their structure and configuration. With particular reference to off-road versions, they are configured to have front approach, ramp, and rear departure angles suitable for use even on rough terrain and/or steep slopes.

On the other hand, there is a strong need today for electric-powered vehicles, primarily due to the significantly reduced environmental impact of electric vehicles compared to traditional internal combustion engine vehicles. However, the size of electric propulsion systems makes difficult their integration into vehicles requiring the above-mentioned characteristics.

### Brief summary of the invention

The purpose of the present invention is therefore to provide an electrically powered road vehicle, possibly also off-road, that retains at least some of the operational versatility described with reference to internal combustion engine vehicles according to the prior art.

This and other objectives are achieved by an electrically powered vehicle according to claim 1.

The dependent claims define possible advantageous embodiments of the invention.

### Brief description of the figures

To better understand the invention and appreciate its advantages, some non-limiting embodiments will be described below, with reference to the accompanying figures, in which:
- Figure 1 is a schematic side view of an electrically powered road vehicle according to one possible embodiment;
- Figure 2 is a schematic plan view of an electrically powered road vehicle according to one possible embodiment;
- Figure 3 is a schematic plan view of an electrically powered road vehicle according to a further possible embodiment;
- Figure 4 is a schematic plan view of an electrically powered road vehicle according to a further possible embodiment;
- Figure 5 is a schematic plan view of an electrically powered road vehicle according to a further possible embodiment;
- Figure 6 is a schematic plan view of an electrically powered road vehicle according to a further possible embodiment.

### Detailed description of the invention

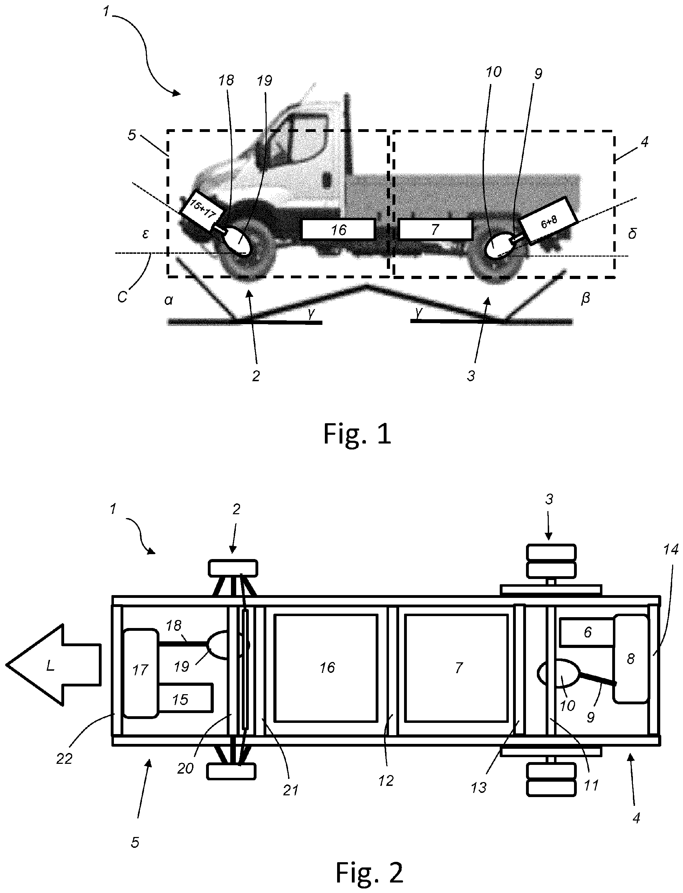

With reference to the attached figures, an electrically powered road vehicle is generally indicated by the reference 1. Vehicle 1 may be of the four-wheel drive type (2 front wheels driven and 3 rear wheels driven) or of the rear-wheel drive type 3, as will be described below. Vehicle 1 is shaped in such a way as to ensure an adequate front approach angle α, a ramp angle γ and a rear departure angle β (in this regard, see in particular Figure 1), depending on the vehicle configuration (off-road or otherwise). For example, if the vehicle is also intended for off-road use (and therefore is generally equipped with larger diameter tires than if the vehicle is intended exclusively for on-road use), the front approach angle α is preferably at least 50°, the ramp angle γ is preferably at least 31°, and the rear departure angle β is preferably at least 30°. If the vehicle is intended exclusively for on-road use, these angles may be smaller than those indicated above.

Vehicle 1 includes at least one rear-mounted electric propulsion system 4 (i.e., which drives the rear drive wheels 3) and, optionally, also a front-mounted electric propulsion system 5 (i.e., which drives the front drive wheels 2), mechanically independent and separate from the rear-mounted electric propulsion system 4. In the first case, vehicle 1 will be a two-wheel drive rear vehicle, while in the second case, it will be a four-wheel drive vehicle. The rear electric propulsion systems 4 and front electric propulsion systems 5 are coordinately controlled by a control unit, not shown in the figures.

The rear electric propulsion system 4 comprises a reversible electric motor 6 (i.e., capable of functioning both as an electric motor, absorbing electrical energy and generating mechanical torque, and as an electric generator, absorbing mechanical energy and generating electrical energy), at least one battery 7 operationally connected to the electric motor 6, a transmission box 8 connected to the electric motor 6, and a drive shaft 9 that connects the transmission box 8 to the rear drive wheels 3 without the use of any clutch. Specifically, the drive shaft 9 is connected to a rear differential 10 located on a rear axle 11 of the rear drive wheels 3.

The transmission box 8 reduces the engine speed and can optionally include a parking brake.

The battery 7 is arranged in front of the rear drive wheels 3, in particular with respect to the rear axle 11, preferably between two cross members 12 and 13 of a ladder frame of the vehicle 1.

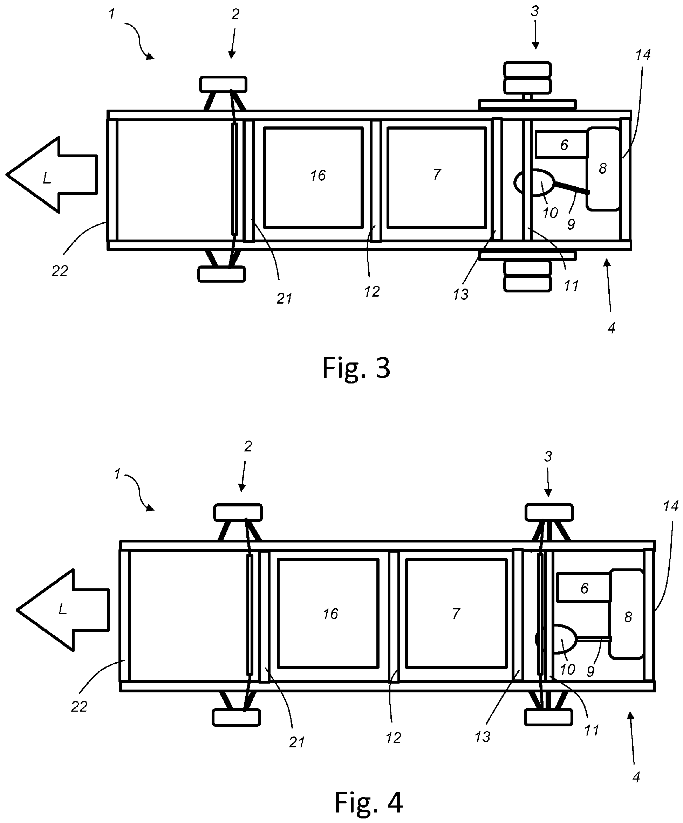

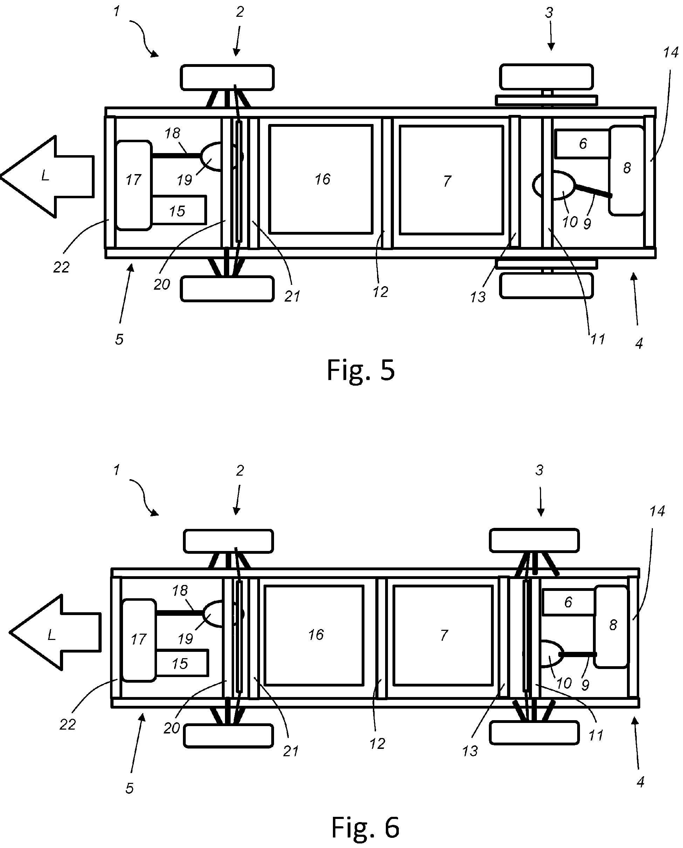

The electric machine 6, the transmission box 8 and the drive shaft 9 are arranged in a cantilevered manner behind the rear drive wheels 3, in particular with respect to the rear axle 11, with the electric machine 6 oriented longitudinally (i.e., with the drive shaft parallel to the longitudinal direction of the vehicle L), the transmission box 8 oriented transversely (e.g., fixed to a rear cross member 14 of the vehicle frame), and the drive shaft 9 oriented longitudinally (as for example in the embodiments shown in Figures 4 and 6) or substantially longitudinally (i.e., slightly inclined with respect to the longitudinal direction of the vehicle L, as for example in the embodiments shown in Figures 2, 3, 5), depending on the positioning of the Rear differential 10, which can be central or lateral on the rear axle 10. In this way, the electric motor 6 - transmission box 8 - drive shaft 9 assembly has a substantially U-shaped configuration.

Furthermore, the electric motor 6, transmission box 8, and drive shaft 9 are arranged elevated with respect to the rear axle 11, such that the drive shaft 9 forms an angle δ greater than 0° with respect to the line C joining the centers of the front wheels 2 and the rear wheels 3.

Preferably, the angle δ is greater than 5° and more preferably is between 20 and 35°, with an optimal value of around 30°, as shown in Figure 1.

This allows the rear departure angle β to be maintained at an adequate level, as previously stated.

The front electric propulsion system 5, where present in addition to the rear electric propulsion system 4, is substantially symmetrical with respect to the latter.

Specifically, the front electric propulsion system 5 comprises a reversible electric motor 15, at least one battery 16 operationally connected to the electric motor 15, a transmission box 17 connected to the electric motor 15, and a drive shaft 18 that connects the transmission box 17 to the front drive wheels 2 without the use of any clutch. Note that battery 16 can also be connected to the electric motor 6 of the rear electric propulsion system 4 to exchange energy with it, and can optionally be present even in the absence of the front electric propulsion system 5, as a second battery of the rear electric propulsion system 4 (see, for example, the embodiments in Figures 3 and 4).

The driveshaft 18 is connected to a front differential 19 located on a front axle 20 of the front drive wheels 2.

The transmission box 17 reduces the rpm and can optionally include a parking brake.

The battery 16 is arranged to the rear of the front drive wheels 2 (and in front of the battery 7), in particular with respect to the front axle 20, preferably between the crossmember 12 and an additional crossmember 21 of the ladder frame of the vehicle 1.

The electric motor 15, the gearbox 17, and the drive shaft 18 are arranged in a cantilever arrangement in front of the front drive wheels 2, in particular with respect to the front axle 20, with the electric motor 15 oriented longitudinally (i.e., with the drive shaft parallel to the longitudinal direction of the vehicle L), the gearbox 17 oriented transversely (for example, attached to a front crossmember 22 of the vehicle frame), and the drive shaft 18 oriented longitudinally or substantially longitudinally, depending on the positioning of the front differential 19, which is preferably lateral but can optionally be central in the front axle 20. In this way, the assembly Electric machine 15 - transmission box 17 - drive shaft 18 has a substantially U-shaped configuration.

Furthermore, electric machine 15, transmission box 17, and drive shaft 18 are arranged elevated with respect to the front axle 20, such that drive shaft 18 forms an angle ε greater than 0° with respect to the line C joining the centers of the front wheels 2 and rear wheels 3. When viewing the vehicle from the side, the line C joining the centers of the front and rear wheels appears approximately parallel to a support surface of the vehicle's front and rear wheels.

Preferably, the angle ε is greater than 5° and more preferably is between 20 and 35°, with an optimal value of around 30°, as shown in Figure 1.

This allows the front approach angle α to be maintained at an adequate level, as previously stated.

The vehicle according to the invention can be configured in various ways. For example:
- all-wheel drive and front-wheel steering (Figure 2)
- rear-wheel drive and front-wheel steering (Figure 3)
- rear-wheel drive and front and rear-wheel steering (Figure 4)
- all-wheel drive and front-wheel steering, with large wheels, for example for off-road use (Figure 5)
- all-wheel drive with front and rear-wheel steering, counter-phase or optionally also phased, with large wheels, for example for off-road use (Figure 6).

It should also be noted that different suspension arrangements are possible in the vehicle according to the invention: for example, independent suspension can be provided as an alternative to the rigid axle.

The embodiments described herein may be combined with one another without departing from the scope of the present invention.

To the embodiments of the electric-powered road vehicle described herein, a skilled person may make numerous additions, modifications, or replacements of elements with functionally equivalent ones to meet specific contingent needs, without departing from the scope of the appended claims.

## Claims

1. Electrically powered road vehicle (1), comprising:
- at least two front (2) and two rear (3) drive wheels, a rear axle (11) and a rear differential (10);
- a rear electric propulsion system (4), comprising a first reversible electric machine (6), at least one battery (7) operatively connected to the first electric machine (6), a first transmission box (8) connected to the first electric machine (6), and a first transmission shaft (9) connecting the first transmission box (8) to the rear differential (10),
wherein the battery (7) is arranged in front of the rear axle (11),
wherein the first electric machine (6), the first transmission box (8) and the first transmission shaft (9) are arranged raised and cantilevered to the rear of the rear axle (11), with the electric machine (6) oriented longitudinally, the first transmission box (8) oriented transversely and the first transmission shaft (9) oriented longitudinally or substantially longitudinally, such that the first electric machine (6) - first transmission box (8) - first transmission shaft assembly (9) has a substantially U-shaped configuration.

2. Electrically powered road vehicle (1) according to claim 1, further comprising:
- said two front driving wheels (2), a front axle (20) and a front differential (19);
- a front electric propulsion system (5) mechanically independent and separate from the rear electric propulsion system (4), said front electric propulsion system (5) comprising: a second reversible electric machine (15), at least one battery (16) operatively connected to the electric machine (15), a second transmission box (17) connected to the second electric machine (15), and a second transmission shaft (18) connecting the second transmission box (17) to the front differential (19),
wherein the battery (16) is arranged to the rear of the front axle (20),
wherein the second electric machine (15), the second transmission box (17) and the second transmission shaft (18) are arranged raised and cantilevered to the front of the front axle (11), with the second electric machine (15) oriented longitudinally, the second transmission box (17) oriented transversely and the transmission shaft (18) oriented longitudinally or substantially longitudinally, so that the second electric machine (15) - second transmission box (17) - second transmission shaft (18) assembly has a substantially U-shaped configuration.

3. Electrically powered road vehicle (1) according to claim 1 or 2, comprising a chassis with side members with a plurality of cross-members (12, 13, 21), in which the battery (7) of the rear electric propulsion system (4) and/or the battery (16) of the front electric propulsion system (5) are respectively arranged between two successive cross-members of said plurality of cross-members.

4. Electrically powered road vehicle (1) according to any of the preceding claims, wherein the rear differential (10) is arranged centrally or laterally on the rear axle (11) and/or the front differential (19) is arranged centrally or laterally on the front axle (20).

5. Electrically powered road vehicle (1) according to any of the preceding claims, wherein the front wheels and/or the rear wheels are steering.

6. Electrically powered road vehicle (1) according to any of the preceding claims 1 - 5, wherein a first angle (δ) defined between the first transmission shaft (9) and a line (C) joining the centers of the front (2) and rear (3) wheels is greater than 5° and more preferably is between 20 and 35, with an optimal value of about 30°.

7. Electrically powered road vehicle (1) according to any of the preceding claims 2 - 6, wherein a second angle (δ) defined between the second drive shaft (18) and a line joining (C) the centres of the front (2) and rear (3) wheels is greater than 5° and more preferably is between 20 and 35, with an optimum value of about 30°.
